# EUROPÄISCHE PATENTSCHRIFT

(11) **EP 3 523 850 B1**
(45) Veröffentlichungstag und Bekanntmachung des Hinweises auf die Patenterteilung: **03.06.2020**
(21) Anmeldenummer: 17772033.1
(22) Anmeldetag: 22.09.2017
(51) Int. Cl.: H01M 8/04298, H01M 8/04, H01M 8/04082

(54) **BRENNSTOFFZELLENMODUL MIT KUPPLUNGSEINHEIT**
FUEL CELL MODULE HAVING A COUPLING UNIT
MODULE DE PILE À COMBUSTIBLE AVEC UNITÉ DE RACCORDEMENT

(30) Priorität: 07.10.2016 DE 102016219523; 07.10.2016 DE 102016219524
(43) Veröffentlichungstag der Anmeldung: 14.08.2019
(73) Patentinhaber: thyssenkrupp Marine Systems GmbH, 24143 Kiel (DE); thyssenkrupp AG, 45143 Essen (DE)
(72) Erfinder: KRUMMRICH, Stefan, 24634 Padenstedt (DE); POMMER, Hans, 24360 Barkelsby (DE); RUSER, Dennis, 24211 Preetz (DE); VOGLER, Malte, 24211 Lehmkuhlen (DE)
(74) Vertreter: thyssenkrupp Intellectual Property GmbH
(86) Internationale Anmeldenummer: PCT/EP2017/074018
(87) Internationale Veröffentlichungsnummer: WO 2018/065236

(56) Entgegenhaltungen:
- DE-A1-102007 051 311
- DE-A1-102014 219 164
- DE-B3-102004 004 624
- DE-C1- 19 822 697

## Beschreibung

Die Erfindung betrifft ein Brennstoffzellenmodul zum Einbau in einer Brennstoffzellenanlage zum schnellen und einfachen Austausch von Brennstoffzellenstacks.

Brennstoffzellen werden heute in einigen Bereichen eingesetzt. Ein wichtiger Bereich ist die außenluftunabhängige Energieversorgung in Unterseebooten.

Leider sind Brennstoffzellen noch immer nicht unbegrenzt langzeitstabil. Daher müssen Stacks regelmäßig ausgetauscht werden. Dieser Austausch ist insbesondere in einem Unterseeboot ein kritischer Punkt und unterscheidet sich somit von allen Anwendungen an Land. Da hier ein Austausch auch während des Einsatzes möglich sein muss, muss der Austausch von der Besatzung und nicht durch Servicepersonal vorgenommen werden. Es ist daher wichtig, den Austausch einfach zu ermöglichen.

Aus der CN 102 569 851 A1 ist eine Schnellkupplungsvorrichtung bekannt.

Aus der US 2004/0043724 A1 ist ein Brennstoffzellensystem mit Modulen bekannt.

Aus der US 2013/0280635 A1 ist ein modulares Brennstoffzellensystem bekannt.

Aus der US 4,976,162 ist eine Brennstoffzelle mit Mitteln zur Entfernung von Produktwasser bekannt.

Aus der US 2012/0135326 A1 ist eine Brennstoffzelle mit einem Verteilerrohr bekannt.

Aus der DE 10 2004 004624 B3 ist eine U-Boot-Brennstoffzelleneinrichtung in modularem Aufbau bekannt.

Aus der DE 10 2014 219164 A1 ist ein Brennstoffzellenstapel bekannt.

Aus der DE 198 22 697 C1 ist ein Brennstoffzellensystem mit Anschlüssen für eine Gasquelle sowie elektrischen Anschlüssen bekannt.

Aus der DE 10 2007 051311 A1 ist ein Kraftstofftank mit mindestens einer Schnittstelle für ein Brennstoffzellenmodul bekannt, wobei die Schnittstelle eine lösbare Kopplung ermöglicht.

Aufgabe der Erfindung ist es, ein Brennstoffzellenmodul bereitzustellen, welches beispielsweise durch eine Schiffsbesatzung einfach ausgetauscht werden kann.

Gelöst wird diese Aufgabe durch ein Brennstoffzellenmodul mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Brennstoffzellenmodul weist wenigstens einen ersten Kathodenraum und wenigstens einen ersten Anodenraum sowie wenigstens eine erste Membran auf. Die wenigstens eine erste Membran ist zwischen dem wenigstens einen ersten Anodenraum und dem wenigstens einen ersten Kathodenraum angeordnet. Diese Anordnung bildet somit eine erste Elementarzelle. Das Brennstoffzellenmodul weist wenigstens eine erste Anodenversorgungsvorrichtung zur Zuführung von Anodengas zum wenigstens einen ersten Anodenraum auf. An der Anode wird beispielsweise Wasserstoff umgesetzt, sodass als Anodengas Wasserstoff oder wasserstoffhaltige Gasgemische eingesetzt werden können. Bevorzugt weist das Anodengas wenigstens 80 % rel. Feuchte, besonders bevorzugt wenigstens 95 % rel. Feuchte auf. Das Brennstoffzellenmodul weist wenigstens eine erste Kathodenversorgungsvorrichtung zur Zuführung von Kathodengas zum wenigstens einen ersten Kathodenraum auf. Als Kathodengas kann beispielsweise Sauerstoff verwendet werden. Üblicherweise enthält Kathodengas Inertgas, wie zum Beispiel Stickstoff, Helium, Neon und/oder Argon. Bevorzugt weist das Kathodengas wenigstens 80 % rel. Feuchte, besonders bevorzugt wenigstens 95 % rel. Feuchte auf. Das Brennstoffzellenmodul weist wenigstens eine Anodenentsorgungsvorrichtung zur Abführung von Anodenrestgas vom wenigstens einen ersten Anodenraum auf. Theoretisch kann eine Brennstoffzelle so betrieben werden, dass kein Anodenrestgas auftritt. Dieses ist jedoch praktisch nicht möglich, da bereits Spuren von Inertgas aus dem zugeführten Anodengas, beispielsweise Wasserstoff, durch die Membran diffundierendes Inertgas oder Wasser sich in dem Anodenraum ansammeln würde. Es ist daher sinnvoll zum Austrag dieser Gase aus dem Anodenraum die Abführung von Anodenrestgas über eine Anodenentsorgungsvorrichtung vorzusehen. Besonders bevorzugt kann Anodenrestgas auch rezirkuliert werden. Das Brennstoffzellenmodul weist wenigstens eine erste Kathodenentsorgungsvorrichtung zur Abführung von Kathodenrestgas von wenigstens einem ersten Kathodenraum auf. Das Kathodenrestgas enthält unter anderem auch das Produkt Wasser. Daher ist ein Kathodenrestgasstrom wünschenswert, der das entstehende Wasser mit austragen kann. Besonders bevorzugt kann auch das Kathodenrestgas rezirkuliert werden. Die wenigstens eine erste Anodenversorgungsvorrichtung weist wenigstens eine erste Anodengaskupplung auf. Die wenigstens eine erste Kathodenversorgungsvorrichtung weist wenigstes eine erste Kathodengaskupplung auf. Die wenigstens eine erste Anodenentsorgungsvorrichtung weist wenigstens eine erste Anodenrestgaskupplung auf. Die wenigstens eine erste Kathodenentsorgungsvorrichtung weist wenigstens eine erste Kathodenrestgaskupplung auf. Um einen Ein- und Ausbau des Brennstoffzellenmoduls zu ermöglichen, müssen die gasführenden Einrichtungen mit Kupplungen ausgeführt sein. Die wenigstes eine erste Anodengaskupplung, die wenigstes eine erste Kathodengaskupplung und die wenigstens eine erste Anodenrestgaskupplung, die wenigstens eine erste Kathodenrestgaskupplung sind jeweils als Schnellschlusskupplung ausgeführt. Die Schnellschlusskupplung hat den Vorteil, dass ein Austritt insbesondere von Wasserstoff in die Umgebung und von Luft aus der Umgebung in das System auch beim Austausch vermieden werden kann. Das Brennstoffzellenmodul weist wenigstens eine erste elektrische Anodenverbindung mit wenigstens einer ersten Anodenkupplung sowie wenigstens eine erste elektrische Kathodenverbindung mit wenigstens einer ersten Kathodenkupplung auf. Über die Anodenverbindung und Kathodenverbindung wird das durch die Reaktion in der Brennstoffzelle erzeugte Potential zur Verfügung gestellt, bei den Verbindungen und Kupplungen handelt es sich also um elektrische Übertragungseinrichtungen, wie zum Beispiel Stecker. Über die Anoden- und Kathodenkupplung fließt der elektrische Strom zum Verbraucher. Die wenigstens eine erste Anodengaskupplung, die wenigstes eine erste Kathodengaskupplung und die wenigstens eine erste Anodenrestgaskupplung, die wenigstens eine erste Kathodenrestgaskupplung, die wenigstens eine erste Anodenkupplung und die wenigstens eine erste Kathodenkupplung sind an einer Seite des Brennstoffzellenmoduls angeordnet. Die Anbringung aller Kupplungen an einer einzigen Seite ermöglicht das gleichzeitige Öffnung und Schließen aller Verbindungen in nur einem einzigen Arbeitsschritt.

Vorzugsweise weist das Brennstoffzellenmodul ein Modulgehäuse auf. Das Modulgehäuse dient als tragendes und verbindendes Element und stellt vorzugsweise den mechanischen Kontakt zwischen dem Brennstoffzellenmodul und einer Brennstoffzellenanlage her. Bevorzugt ist das Modulgehäuse rechteckig ausgeführt.

Vorzugsweise weist ein Bernnstoffzellenmodul eine Vielzahl an Kathodenräumen, Anodenräumen und Membranen auf und bildet somit eine Vielzahl an Elementarzellen. Eine solche Anordnung wird als Brennstoffzellenstack bezeichnet, wenn die Elementarzellen übereinanderliegend angeordnet sind.

Unter einer Schnellschlusskupplung wird im Sinne der Erfindung eine Kupplung verstanden, welche einen schnellen Wechsel erlaubt, insbesondere welche die Gasverbindungen beim Trennen automatisch verschließt und somit leckfrei zu lösen ist. Solche Schnellschlusskupplungen werden auch als Clean-Break-Kupplung bezeichnet.

In einer weiteren Ausführungsform der Erfindung weist das Brennstoffzellenmodul wenigstens einen ersten Wasserablass auf, wobei der wenigstens eine erste Wasserablass mit der wenigstens einen ersten Kathodenentsorgungsvorrichtung verbunden ist. Der wenigstens eine erste Wasserablass weist eine erste Wasserablasskupplung auf, wobei die erste Wasserablasskupplung als Schnellschlusskupplung ausgeführt ist. Das in der Brennstoffzelle entstehende Wasser kann bereits in der Brennstoffzelle auf der Kathodenseite und auch in der Kathodenentsorgungsvorrichtung kondensieren. Um das Wasser effizient abführen zu können, ist daher ein getrennter Wasserablass sinnvoll. Der Wasserablass verfügt ebenfalls über eine Wasserablasskupplung in Form einer Schnellschlusskupplung, um beim Trennen des Brennstoffzellenmoduls ein Eintreten von Umgebungsluft in das Brennstoffzellenmodul zu verhindern.

In einer weiteren Ausführungsform der Erfindung weist das Brennstoffzellenmodul wenigstens eine erste Justiervorrichtung auf. Die wenigstens eine Justiervorrichtung dient dazu, das Brennstoffzellenmodul schnell, einfach und zuverlässig in die Brennstoffzellenanlage einsetzen zu können und dient der mechanischen Ausrichtung des Brennstoffzellenmoduls gegenüber der Brennstoffzellenanlage. Die wenigstens eine Justiervorrichtung kann vorzugsweise zylinderförmig und/oder kegelförmig ausgeführt sein. Besonders bevorzugt ist die wenigstens eine Justiervorrichtung so ausgeführt, dass diese beim Einführen des Brennstoffzellenmoduls in eine Brennstoffzellenanlage vor den Kupplungen mit der Brennstoffzellenanlage in Kontakt kommt. Daher ragt die wenigstens eine Justiervorrichtung weiter über den Grundkörper des Brennstoffzellenmoduls heraus als die Kupplungen. Durch die wenigstens eine Justiervorrichtung wird so erreicht, dass die Kupplungen reproduzierbar ein die entsprechenden Gegenstücke der Brennstoffzellenanlage eingreifen und so unmittelbar eine gasdichte Verbindung hergestellt werden kann ohne das hierfür weitere technische Hilfsmittel oder besondere Vorsicht notwendig wären.

Erfindungsgemäß sind alle Kupplungen so ausgeführt, dass diese selbstkuppelnd sind. Selbstkuppelnd heißt im Sinne der Erfindung, dass alle Kupplungen mit der Pressbewegung eine dichte, bzw. elektrische Verbindung herstellen. Bevorzugt ist wenigstens eine Kupplung verriegelbar und somit gegen selbstständiges Lösen gesichert.

In einer weiteren Ausführungsform der Erfindung weist das Brennstoffzellenmodul wenigstens eine erste Datenkupplung auf.

In einer weiteren Ausführungsform der Erfindung weist das Brennstoffzellenmodul wenigstens eine erste Stromversorgungskupplung auf. Die wenigstens eine erste Stromversorgungskupplung dient zur Stromversorgung von elektrischen Komponenten, zum Beispiel Sensoren, Prozessoren und/oder Datenspeichervorrichtungen. Der Vorteil ist, dass die so zur Verfügung gestellte Energie die notwendige Anforderung an Stabilität der Spannung und auch die richtige Spannung für die elektronischen Komponenten aufweist und somit zuverlässiger als die in den Brennstoffzellenmodul erzeugte Energie ist.

In einer weiteren Ausführungsform der Erfindung weist das Brennstoffzellenmodul wenigstens einen ersten Spannungssensor zur Erfassung der Zellspannung über die wenigstens eine erste Membran auf.

In einer weiteren Ausführungsform der Erfindung weist das Brennstoffzellenmodul einen Datenspeicher und eine Datenverarbeitungsvorrichtung auf, wobei die Datenverarbeitungsvorrichtung zur Erfassung von Betriebsparametern ausgebildet ist und die Datenverarbeitungsvorrichtung zur Speicherung der Betriebsparameter auf dem Datenspeicher ausgebildet ist. Gegenüber herkömmlichen Systemen weist ein solches Brennstoffzellenmodul den Vorteil auf, dass die Betriebsparameter nicht zentral, sondern dezentral auf dem Brennstoffzellenmodul gespeichert sind. Eine zentrale Datenspeicherung kann dennoch optional ebenfalls erfolgen. Die Daten sind somit untrennbar mit dem Brennstoffzellenmodul verbunden. Hierdurch stehen die Betriebsparameter auch nach Ausbau für eine Fehleranalyse zur Verfügung. Des Weiteren können diese Betriebsparameter auch nach einem erneuten Einbau durch das Gesamtsystem wieder aus dem Datenspeicher übernommen werden, wodurch das Gesamtsystem Kenntnis über die Betriebseigenschaften dieses Brennstoffzellenmoduls erlangt. Hierdurch wird der Arbeitsablauf beim Austausch der Brennstoffzellenmodule effizienter und schneller.

In einer weiteren Ausführungsform der Erfindung werden weitere Daten über eine erste Schnittstelle über die wenigstens eine erste Datenkupplung empfangen und auf dem Datenspeicher gespeichert. Bevorzugt werden zumindest die Betriebsstunden, die Zellspannung sowie die Temperatur über die Zeit gespeichert. Besonders bevorzugt werden auch die Zeitpunkte sowie die Art bestimmter Ereignisse, wie zum Beispiel Spannungssprünge, Kurzschlüsse, Medienausfall, Anfahren und/oder Abschalten, gespeichert. Bei den weiteren Daten kann es sich bevorzugt um Umgebungsparameter, wie zum Beispiel Kühlwassertemperatur, handeln. Diese Umgebungsparameter werden vorzugsweise für alle Brennstoffzellenmodule zentral erfasst.

In einer weiteren Ausführungsform der Erfindung weist das Modulgehäuse wenigstens einen ersten Lufteinlass auf. Der erste Lufteinlass dient der Wärmeabfuhr, um die Datenverarbeitungseinrichtung und die Datenspeicherbetrieb vor Überhitzung zu schützen. Der wenigstens eine erste Lufteinlass kann an der Seite des Modulgehäuses angeordnet sein, an welcher auch die Kupplungen angeordnet sind. Alternativ oder zusätzlich kann der wenigstens eine erste Lufteinlass auf wenigstens einer Seite des Modulgehäuses angeordnet sein, welche an die Seite des Modulgehäuses angrenzt, an welcher die Kupplungen angeordnet sind. Besonders bevorzugt befindet sich der wenigstens eine erste Lufteinlass in dieser Ausführungsform in unmittelbarer Nähe zu der Seite des Modulgehäuses, an welcher die Kupplungen angeordnet sind.

In einer weiteren Ausführungsform der Erfindung ist das Modulgehäuse zur ausschließlich passiven Luftkühlung des Datenspeichers und der Datenverarbeitungsvorrichtung ausgebildet. Durch die ausschließlich passive Luftkühlung kann auf einen Kühler in Form eines Gebläse oder eines Kühlflüssigkeitskreislaufs verzichtet werden. Hierdurch ist eine besonders kompakte, wartungsarme und robuste Bauweise möglich. Bevorzugt sind der Datenspeicher und die Datenverarbeitungsvorrichtung thermisch mit dem Modulgehäuse gekoppelt, so dass deren Abwärme über das Modulgehäuse abgegeben werden kann.

In einer weiteren Ausführungsform der Erfindung weist das Brennstoffzellenmodul einen Kühlwasserzulauf und einen Kühlwasserablauf auf. Das Kühlwasser dient insbesondere zur Kühlung der Brennstoffzellenmembranen.

In einer weiteren Ausführungsform der Erfindung weist das Brennstoffzellenmodul zwei elektrische Anodenverbindungen mit zwei Anodenkupplungen sowie zwei elektrische Kathodenverbindungen mit zwei Kathodenkupplungen auf. Besonders bevorzugt sind die zwei Anodenkupplungen und die zwei Kathodenkupplungen so angeordnet, dass die vier Kupplungen die Ecken eines Rechtecks bilden, wobei die beiden Anodenkupplungen sich diagonal gegenüber liegen und die beiden Anodenkupplungen sich diagonal gegenüber liegen.

In einer weiteren Ausführungsform der Erfindung weist das Brennstoffzellenmodul einen Kontaktschalter auf. Der Kontaktschalter dient dazu, dass das Brennstoffzellenmodul und/oder die Brennstoffzellenanlage erkennen kann, ob dieses Brennstoffzellenmodul in eine Brennstoffzellenanlage eingebaut ist oder von dieser gelöst vorliegt.

In einer weiteren Ausführungsform der Erfindung weist die Justiervorrichtung eine Verjüngung auf, wobei die Verjüngung dazu ausgebildet ist, dass eine Fixiervorrichtung der Brennstoffzellenanlage in diese Verjüngung eingreifen und somit das Brennstoffzellenmodul fixieren und vor unbeabsichtigter Entfernung schützen kann. Insbesondere ist die Fixiervorrichtung so ausgebildet, dass diese zunächst manuell, beispielsweise über einen Hebel, gelöst werden muss, bevor das Brennstoffzellenmodul gelöst werden kann. Dieser Hebel kann in einer Ausführungsform auch zur Trennung des Brennstoffzellenmoduls von der Brennstoffzellenanlage ausgebildet sein.

Erfindungsgemäß weist das Brennstoffzellenmodul wenigstens einen eine Frontwasserablasskupplung auf, welche auf der Seite des Modulgehäuses angeordnet, welcher der Seite des Modulgehäuses gegenüberliegend ist, an welcher die anderen Kupplungen angeordnet sind. Hierdurch kann beispielsweise Prozesswasser sich auch bei einer Schräglage der Brennstoffzellenanlage nicht in den Zellen ansammeln, sondern über die Frontwasserablasskupplung abgeführt werden. Hierdurch wird ein Absinken der Leistung des Brennstoffzellenmoduls vermieden.

In einer Ausführungsform der Erfindung sind der erste Wasserablass und der zweite Wasserablass mit dem Kathodenraum verbunden, der dritte Wasserablass und der vierte Wasserablass mit dem Anodenraum.

In einer weiteren alternativen Ausführungsform der Erfindung sind der erste Wasserablass, der zweite Wasserablass, der dritte Wasserablass und der vierte Wasserablass mit dem Kathodenraum verbunden.

In einer weiteren alternativen und bevorzugten Ausführungsform der Erfindung weist das Brennstoffzellenmodul einen zweiten Wasserablass und einen vierten Wasserablass auf, wobei der zweite Wasserablass und der vierte Wasserablass auf der zweiten Seite angeordnet sind.

In einer Ausführungsform der Erfindung ist der dritte Wasserablass mit dem ersten Wasserablass verbunden und der vierte Wasserablass ist mit dem zweiten Wasserablass verbunden.

In einer weiteren Ausführungsform der Erfindung sind der erste Wasserablass und der dritte Wasserablass auf der ersten Seite des Brennstoffzellenmoduls und der zweite Wasserablass und der vierte Wasserablass auf der zweiten Seite des Brennstoffzellenmoduls angeordnet. Somit stehen auf der erste Seite und auf der zweiten Seite jeweils zwei Wasserablässe zur Verfügung. Hierdurch kann die Zuverlässigkeit des Wasserabflusses weiter gesteigert werden.

In einer weiteren Ausführungsform der Erfindung weist das Brennstoffzellenmodul einen zweiten Wasserablass und einen vierten Wasserablass auf. Der zweite Wasserablass und der vierte Wasserablass sind auf der zweiten Seite angeordnet. Der Kathodenrestgasauslass und der Anodenrestgasauslass sind auf der ersten Seite angeordnet. Der zweite Wasserablass ist mit dem Kathodenrestgasauslass und der vierte Wasserablass mit dem Anodenrestgasauslass verbunden. Besonders bevorzugt sind die Verbindungen zwischen den Wasserablässen und den Restgasauslässen oberhalb ihrer Anordnung am Brennstoffzellenmodul angeordnet.

In einer weiteren Ausführungsform der Erfindung sind der erste Wasserablass und der dritte Wasserablass auf der ersten Seite des Brennstoffzellenmoduls horizontal zueinander beabstandet und der zweite Wasserablass und der vierte Wasserablass auf der zweiten Seite des Brennstoffzellenmoduls horizontal zueinander beabstandet angeordnet. Ganz besonders sind der erste Wasserablass und der dritte Wasserablass sowie der zweite Wasserablass und der vierte Wasserablass derart horizontal voneinander beabstandet, wie dieses baulich bei einem Brennstoffzellenmodul unter Berücksichtigung von Stabilität und Herstellbarkeit ermöglicht. Hierdurch ergibt sich eine Anordnung der Wasserablässe praktisch an vier gegenüberliegenden Ecken im Querschnitt des Brennstoffzellenmoduls, sodass bei praktisch jeder Schräglage zumindest ein Wasserablass an der tiefsten Stelle zu liegen kommt.

Nachfolgend ist das erfindungsgemäße Brennstoffzellenmodul anhand in den Zeichnungen dargestellter Ausführungsbeispiele näher erläutert.
- Fig. 1: erstes beispielhaftes Brennstoffzellenmodul
- Fig. 2: zweites beispielhaftes Brennstoffzellenmodul
- Fig. 3: drittes beispielhaftes Brennstoffzellenmodul
- Fig. 4: viertes beispielhaftes Brennstoffzellenmodul
- Fig. 5: fünftes beispielhaftes Brennstoffzellenmodul
- Fig. 6: sechstes beispielhaftes Brennstoffzellenmodul
- Fig. 7: siebentes beispielhaftes Brennstoffzellenmodul
- Fig. 8: achtes beispielhaftes Brennstoffzellenmodul
- Fig. 9: Justiervorrichtung mit Verjüngung

Die einzelnen beispielhaften Ausführungsformen der Figuren sind selbstverständlich in beliebigen Kombinationen mit einander kombinierbar.

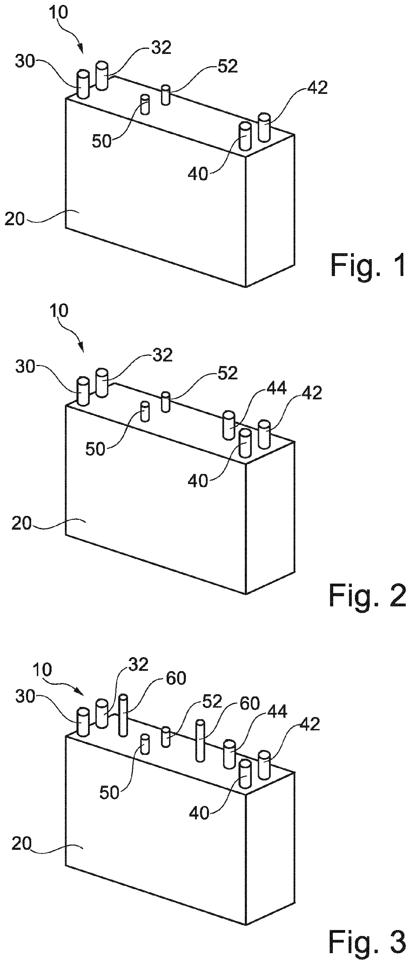

Fig. 1 zeigt ein erstes beispielhaftes Brennstoffzellenmodul 10. Dieses weist ein in erster Näherung rechteckiges Modulgehäuse 20 auf. Auf einer Seite des Modulgehäuses 20 sind Kupplungen angeordnet, um das Brennstoffzellenmodul 10 in eine Brennstoffzellenanlage 100 (hier nicht gezeigt) einzubringen und zu verbinden. Die Anodengaskupplung 30 dient zur Wasserstoffversorgung, die Kathodengaskupplung 32 zur Sauerstoffversorgung, die Anodenrestgaskupplung 40 zur Abfuhr von überschüssigem Wasserstoff, ggf. Inertgas und Wasser (aus der Befeuchtung des Wasserstoffs sowie durch Diffusion durch die Membran), die Kathodenrestgaskupplung zur Abfuhr von Wasser, überschüssigem Sauerstoff und ggf. Inertgas. Zusätzlich dienen die Anodenkupplung 50 zur Übertragung des an der Anode anliegenden Potentials und die Kathodenkupplung 52 zur Übertragung des an der Kathode anliegenden Potentials. Hierdurch ist durch einen einzigen Steckvorgang es möglich, das das Brennstoffzellenmodul 10 in eine Brennstoffzellenanlage 100 einzubringen oder zu entfernen und gleichzeitigt alle Verbindungen zu verbinden oder zu trennen.

Ein zweites beispielhaftes Brennstoffzellenmodul 10 ist in Fig. 2 gezeigt. Dieses unterscheidet sich von dem ersten beispielhaften Brennstoffzellenmodul 10 dadurch, dass das Brennstoffzellenmodul 10 zusätzlich eine Wasserablasskupplung 44. Da in dem Brennstoffzellenmodul 10 Wasser hergestellt wird und gleichzeitig zusätzlich die Gesamtgasmenge durch Reaktion reduziert wird, wobei die Eduktgase üblicherweise einen hohen Anteil an Wasser aufweisen, ist die gesonderte Abführung von Wasser in flüssiger Phase oftmals vorteilhaft.

Ein drittes beispielhaftes Brennstoffzellenmodul 10 ist in Fig. 3 gezeigt. Dieses unterscheidet sich von dem in Fig. 2 gezeigtem zweiten beispielhaften Brennstoffzellenmodul 10 dadurch, dass das Brennstoffzellenmodul 10 zusätzlich zwei Justiervorrichtungen 60 aufweist. Die Justiervorrichtungen 60 sind zylinderförmig ausgeführt. Gut erkennbar ist, dass die Justiervorrichtungen 60 länger als die Kupplungen ausgeführt sind. Somit treten die Justiervorrichtungen 60 beim Einführen des Brennstoffzellenmoduls 10 in eine Brennstoffzellenanlage 100 zuerst mit dieser in Kontakt. Dadurch kann das weitere Einführen des Brennstoffzellenmoduls 10 so geführt werden, dass alle Kupplungen unmittelbar passgenau zueinander geführt werden.

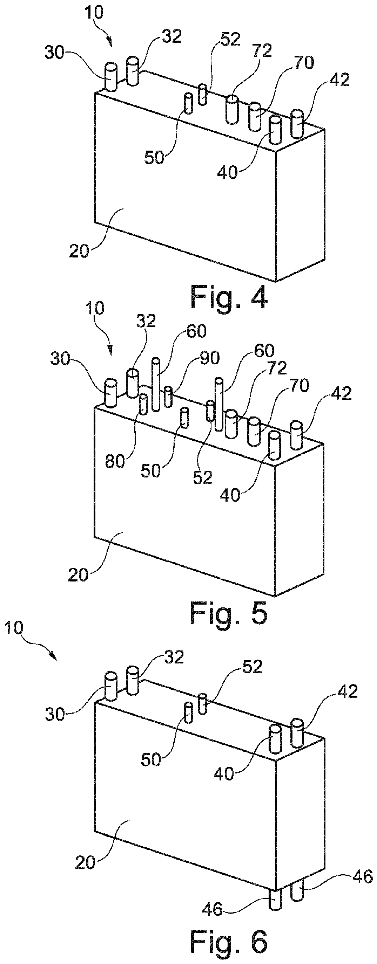

Ein in Fig. 4 gezeigtes viertes beispielhaftes Brennstoffzellenmodul 10 unterscheidet sich vom in Fig. 1 gezeigten ersten beispielhaften Brennstoffzellenmodul 10 durch einen Kühlwasserzulauf 70 und einen Kühlwasserablauf 72. Um die Temperatur in den Zellen konstant zu halten und eine Überhitzung zu verhindern ist eine aktive Kühlung oftmals sinnvoll.

Ein in Fig. 5 gezeigtes fünftes beispielhaftes Brennstoffzellenmodul 10 weist zusätzlich zu dem in Fig. 4 gezeigten vierten beispielhaften Brennstoffzellenmodul 10 zwei Justiervorrichtungen 60 auf. Zusätzlich weist das fünfte beispielhafte Brennstoffzellenmodul 10 eine Datenkupplung 80 und eine Stromversorgungskupplung 90 auf. Über die Stromversorgungskupplung 90 können elektronische Komponenten des fünften beispielhaften Brennstoffzellenmoduls 10 mit Energie versorgt werden und über die Datenkupplung 80 Daten mit der Brennstoffzellenanlage 100 austauschen.

Fig. 6 zeigt ein sechstes beispielhaftes Brennstoffzellenmodul 10, wobei das sechste beispielhafte Brennstoffzellenmodul 10 zusätzlich zu dem in Fig. 1 gezeigten ersten beispielhaften Brennstoffzellenmodul 10 zwei an der Vorderseite angeordnete Frontwasserablasskupplungen 46 aufweist. Hierdurch kann Wasser sowohl an der Vorderseite als auch an der Kupplungsseite des Brennstoffzellenmoduls angelassen werden. Hierdurch kann auch bei schräger Stellung des Brennstoffzellenmoduls 10 es zu keiner Anreicherung von Wasser in den Brennstoffzellen kommen, wodurch das effektive Volumen und somit die Energieerzeugung reduziert werden würde.

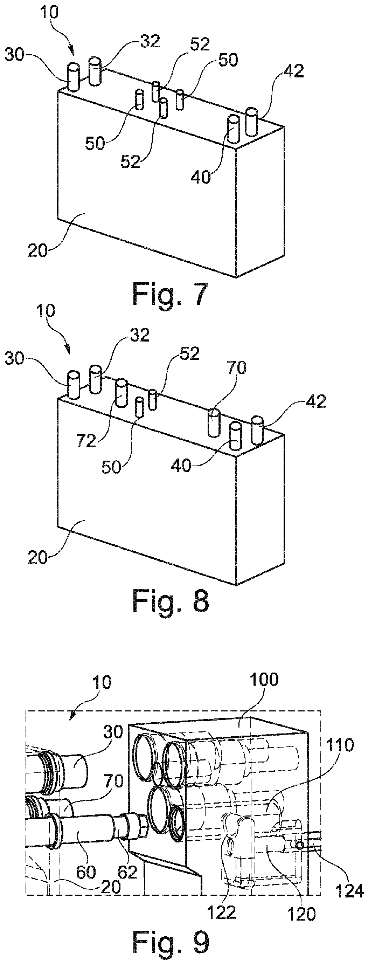

Fig. 7 zeigt ein siebentes beispielhaftes Brennstoffzellenmodul 10, wobei das siebente beispielhafte Brennstoffzellenmodul 10 zusätzlich zu dem in Fig. 1 gezeigten ersten beispielhaften Brennstoffzellenmodul 10 zwei Anodenkupplungen 50 und zwei Kathodenkupplungen 52 aufweist, wobei die Anodenkupplungen 50 und die Kathodenkupplungen 52 kreuzweise sich jeweils gegenüberliegend angeordnet sind.

Ein in Fig. 8 gezeigtes achtes beispielhaftes Brennstoffzellenmodul 10 unterscheidet sich vom in Fig. 4 gezeigten vierten beispielhaften Brennstoffzellenmodul 10 dadurch, dass der Kühlwasserzulauf 70 und der Kühlwasserablauf 72 beabstandet voneinander angeordnet sind.

In Fig. 9 ist eine beispielhafte Justiervorrichtung 60 vergrößert dargestellt, wobei die Justiervorrichtung 60 eine Verjüngung 62 aufweist. Zum einen ist offensichtlich, dass die Justiervorrichtung 62 weiter aus dem Modulgehäuse 20 herausragt als beispielsweise die Anodengaskupplung 30 und der Kühlwasserzulauf 70. Hierdurch kommt die Justiervorrichtung 60 beim Einführen in eine Brennstoffzellenanlage 100 zunächst mit dieser in Kontakt und übernimmt dadurch die Positionierung. Des Weiteren ist die Verjüngung 62 so ausgeführt, dass eine Fixiervorrichtung 120 mit einem Kontaktelement 122 in die Verjüngung 62 eingreifen und so das Brennstoffzellenmodul 10 so in der Brennstoffzellenanlage 100 verriegeln kann. Hierdurch ist ein unbeabsichtigtes Entfernen nicht möglich. Zum Entfernen weist die Fixiervorrichtung 120 eine Auslösevorrichtung 124 beispielsweise in Form eines Hebels auf.

### Bezugszeichen

- 10: Brennstoffzellenmodul
- 20: Modulgehäuse
- 30: Anodengaskupplung
- 32: Kathodengaskupplung
- 40: Anodenrestgaskupplung
- 42: Kathodenrestgaskupplung
- 44: Wasserablasskupplung
- 46: Frontwasserablasskupplung
- 50: Anodenkupplung
- 52: Kathodenkupplung
- 60: Justiervorrichtung
- 62: Verjüngung
- 70: Kühlwasserzulauf
- 72: Kühlwasserablauf
- 80: Datenkupplung
- 90: Stromversorgungskupplung
- 100: Brennstoffzellenanlage
- 110: Justieraufnahme
- 120: Fixiervorrichtung
- 122: Kontaktelement
- 124: Auslösevorrichtung

## Patentansprüche

1. Brennstoffzellenmodul (10) mit wenigstens einem ersten Kathodenraum und wenigstens einem ersten Anodenraum sowie wenigstens einer ersten Membran, wobei die wenigstens eine erste Membran zwischen dem wenigstens einen ersten Anodenraum und dem wenigstens einen ersten Kathodenraum angeordnet ist, wobei das Brennstoffzellenmodul (10) wenigstens eine erste Anodenversorgungsvorrichtung zur Zuführung von Anodengas zum wenigstens einen ersten Anodenraum aufweist, wobei das Brennstoffzellenmodul (10) wenigstens eine erste Kathodenversorgungsvorrichtung zur Zuführung von Kathodengas zum wenigstens einen ersten Kathodenraum aufweist, wobei das Brennstoffzellenmodul (10) wenigstens eine Anodenentsorgungsvorrichtung zur Abführung von Anodenrestgas vom wenigstens einen ersten Anodenraum aufweist, wobei das Brennstoffzellenmodul (10) wenigstens eine erste Kathodenentsorgungsvorrichtung zur Abführung von Kathodenrestgas vom wenigstens einen ersten Kathodenraum aufweist, wobei die wenigstens eine erste Anodenversorgungsvorrichtung wenigstes eine erste Anodengaskupplung (30) aufweist, wobei die wenigstens eine erste Kathodenversorgungsvorrichtung wenigstes eine erste Kathodengaskupplung (32) aufweist, wobei die wenigstens eine erste Anodenentsorgungsvorrichtung wenigstes eine erste Anodenrestgaskupplung (40) aufweist, wobei die wenigstens eine erste Kathodenentsorgungsvorrichtung wenigstes eine erste Kathodenrestgaskupplung (42) aufweist, wobei die wenigstes eine erste Anodengaskupplung (30), die wenigstes eine erste Kathodengaskupplung (32) und die wenigstens eine erste Anodenrestgaskupplung (40), die wenigstens eine erste Kathodenrestgaskupplung (42) jeweils als Schnellschlusskupplung ausgeführt sind, wobei das Brennstoffzellenmodul (10) wenigstens eine erste Anodenverbindung mit wenigstens einer ersten Anodenkupplung (50) aufweist, wobei das Brennstoffzellenmodul (10) wenigstens eine erste Kathodenverbindung mit wenigstens einer ersten Kathodenkupplung (52) aufweist, wobei die wenigstes eine erste Anodengaskupplung (30), die wenigstes eine erste Kathodengaskupplung (32) und die wenigstens eine erste Anodenrestgaskupplung (40), die wenigstens eine erste Kathodenrestgaskupplung (42), die wenigstens eine erste Anodenkupplung (50) und die wenigstens eine erste Kathodenkupplung (52) an einer Seite des Brennstoffzellenmoduls (10) angeordnet sind, **dadurch gekennzeichnet, dass** alle Kupplungen selbstkuppelnd sind, wobei das Brennstoffzellenmodul wenigstens eine Frontwasserablasskupplung (40) aufweist, wobei die Frontwasserablasskupplung (40) auf der Seite des Modulgehäuses angeordnet, welcher der Seite des Modulgehäuses gegenüberliegend ist, an welcher die anderen Kupplungen angeordnet sind.

2. Brennstoffzellenmodul (10) nach Anspruch 1, **dadurch gekennzeichnet, dass** das Brennstoffzellenmodul (10) wenigstens einen ersten Wasserablass aufweist, wobei der wenigstens eine erste Wasserablass mit der wenigstens einen ersten Kathodenentsorgungsvorrichtung verbunden ist, wobei der wenigstens eine erste Wasserablass eine erste Wasserablasskupplung (44) aufweist, wobei die erste Wasserablasskupplung (44) als Schnellschlusskupplung ausgeführt ist.

3. Brennstoffzellenmodul (10) nach einem der vorstehenden Ansprüche, **dadurch gekennzeichnet, dass** das Brennstoffzellenmodul (10) wenigstens eine erste Justiervorrichtung (60) aufweist.

4. Brennstoffzellenmodul (10) nach einem der vorstehenden Ansprüche, **dadurch gekennzeichnet, dass** das Brennstoffzellenmodul (10) wenigstens eine erste Datenkupplung aufweist.

5. Brennstoffzellenmodul (10) nach einem der vorstehenden Ansprüche, **dadurch gekennzeichnet, dass** das Brennstoffzellenmodul (10) wenigstens eine erste Stromversorgungskupplung (90) aufweist.

6. Brennstoffzellenmodul (10) nach einem der vorstehenden Ansprüche, **dadurch gekennzeichnet, dass** das Brennstoffzellenmodul (10) wenigstens einen ersten Spannungssensor zur Erfassung der Zellspannung über die wenigstens eine erste Membran aufweist.

## Claims

1. Fuel cell module (10) having at least one first cathode chamber and at least one first anode chamber and also at least one first membrane, wherein the at least one first membrane is arranged between the at least one first anode chamber and the at least one first cathode chamber, wherein the fuel cell module (10) comprises at least one first anode supply device for supplying anode gas to the at least one first anode chamber, wherein the fuel cell module (10) comprises at least one first cathode supply device for supplying cathode gas to the at least one first cathode chamber, wherein the fuel cell module (10) comprises at least one anode disposal device for discharging anode residual gas from the at least one first anode chamber, wherein the fuel cell module (10) comprises at least one first cathode disposal device for discharging cathode residual gas from the at least one first cathode chamber, wherein the at least one first anode supply device comprises at least one first anode gas coupling (30), wherein the at least one first cathode supply device comprises at least one first cathode gas coupling (32), wherein the at least one first anode disposal device comprises at least one first anode residual gas coupling (40), wherein the at least one first cathode disposal device comprises at least one first cathode residual gas coupling (42), wherein the at least one first anode gas coupling (30), the at least one first cathode gas coupling (32) and the at least one first anode residual gas coupling (40), the at least one first cathode residual gas coupling (42) are each embodied as a quick-action coupling, wherein the fuel cell module (10) comprises at least one first anode connection having at least one first anode coupling (50), wherein the fuel cell module (10) comprises at least one first cathode connection having at least one first cathode coupling (52), wherein the at least one first anode gas coupling (30), the at least one first cathode gas coupling (32) and the at least one first anode residual gas coupling (40), the at least one first cathode residual gas coupling (42), the at least one first anode coupling (50), and the at least one first cathode coupling (52) are arranged on one side of the fuel cell module (10), **characterized in that** all couplings are self-coupling, wherein the fuel cell module comprises at least one front water drain coupling (40), wherein the front water drain coupling (40) is arranged on the side of the module housing which is opposite to the side of the module housing on which the other couplings are arranged.

2. Fuel cell module (10) according to Claim 1, **characterized in that** the fuel cell module (10) comprises at least one first water drain, wherein the at least one first water drain is connected to the at least one first cathode disposal device, wherein the at least one first water drain comprises a first water drain coupling (44), wherein the first water drain coupling (44) is embodied as a quick-action coupling.

3. Fuel cell module (10) according to any one of the preceding claims, **characterized in that** the fuel cell module (10) comprises at least one first alignment device (60) .

4. Fuel cell module (10) according to any one of the preceding claims, **characterized in that** the fuel cell module (10) comprises at least one first data coupling.

5. Fuel cell module (10) according to any one of the preceding claims, **characterized in that** the fuel cell module (10) comprises at least one first power supply coupling (90).

6. Fuel cell module (10) according to any one of the preceding claims, **characterized in that** the fuel cell module (10) comprises at least one first voltage sensor for registering the cell voltage across the at least one first membrane.

## Revendications

1. Module de cellule de pile à combustible (10) comprenant au moins un premier espace de cathode et au moins un premier espace d'anode ainsi qu'au moins une première membrane, l'au moins une première membrane étant disposée entre l'au moins un premier espace d'anode et l'au moins un premier espace de cathode, le module de cellule de pile à combustible (10) possédant au moins un premier dispositif d'alimentation d'anode destiné à acheminer du gaz d'anode à au moins un premier espace d'anode, le module de cellule de pile à combustible (10) possédant au moins un premier dispositif d'alimentation de cathode destiné à acheminer du gaz de cathode à au moins un premier espace de cathode, le module de cellule de pile à combustible (10) possédant au moins un dispositif d'élimination des déchets d'anode destiné à évacuer le gaz résiduel d'anode d'au moins un premier espace d'anode, le module de cellule de pile à combustible (10) possédant au moins un dispositif d'élimination des déchets de cathode destiné à évacuer le gaz résiduel de cathode d'au moins un premier espace de cathode, l'au moins un premier dispositif d'alimentation d'anode possédant au moins un premier coupleur de gaz d'anode (30), l'au moins un premier dispositif d'alimentation de cathode possédant au moins un premier coupleur de gaz de cathode (32), l'au moins un premier dispositif d'élimination des déchets d'anode possédant au moins un premier coupleur de gaz résiduel d'anode (40), l'au moins un dispositif d'élimination des déchets de cathode possédant au moins un premier coupleur de gaz résiduel de cathode (42), l'au moins un premier coupleur de gaz d'anode (30), l'au moins un premier coupleur de gaz de cathode (32) et l'au moins un premier coupleur de gaz résiduel d'anode (40), l'au moins un premier coupleur de gaz résiduel de cathode (42) étant respectivement réalisés sous la forme d'un coupleur à fermeture rapide, le module de cellule de pile à combustible (10) possédant au moins une première liaison d'anode munie d'au moins un premier coupleur d'anode (50), le module de cellule de pile à combustible (10) possédant au moins une première liaison de cathode munie d'au moins un premier coupleur de cathode (52), l'au moins un premier coupleur de gaz d'anode (30), l'au moins un premier coupleur de gaz de cathode (32) et l'au moins un premier coupleur de gaz résiduel d'anode (40), l'au moins un premier coupleur de gaz résiduel de cathode (42), l'au moins un premier coupleur d'anode (50) et l'au moins un premier coupleur de cathode (52) étant disposés d'un côté du module de cellule de pile à combustible (10), **caractérisé en ce que** tous les coupleurs sont à auto-accouplement, le module de cellule de pile à combustible possédant au moins un coupleur d'écoulement d'eau avant (40), le coupleur d'écoulement d'eau avant (40) étant disposé sur le côté du boîtier de module qui se trouve à l'opposé du côté où sont disposés les autres coupleurs.

2. Module de cellule de pile à combustible (10) selon la revendication 1, **caractérisé en ce que** le module de cellule de pile à combustible (10) possède au moins un premier écoulement d'eau, l'au moins un premier écoulement d'eau étant relié à l'au moins un premier dispositif d'élimination des déchets de cathode, l'au moins un premier écoulement d'eau possédant un premier coupleur d'écoulement d'eau (44), le premier coupleur d'écoulement d'eau (44) étant réalisé sous la forme d'un coupleur à fermeture rapide.

3. Module de cellule de pile à combustible (10) selon l'une des revendications précédentes, **caractérisé en ce que** le module de cellule de pile à combustible (10) possède au moins un premier dispositif d'ajustement (60) .

4. Module de cellule de pile à combustible (10) selon l'une des revendications précédentes, **caractérisé en ce que** le module de cellule de pile à combustible (10) possède au moins un premier coupleur de données.

5. Module de cellule de pile à combustible (10) selon l'une des revendications précédentes, **caractérisé en ce que** le module de cellule de pile à combustible (10) possède au moins un premier coupleur d'alimentation électrique (90).

6. Module de cellule de pile à combustible (10) selon l'une des revendications précédentes, **caractérisé en ce que** le module de cellule de pile à combustible (10) possède au moins un premier capteur de tension destiné à détecter la tension de cellule sur l'au moins une première membrane.
